# FASCICULE DE BREVET EUROPEEN

(11) **EP 3 524 107 B1**
(45) Date de publication et mention de la délivrance du brevet: **21.09.2022**
(21) Numéro de dépôt: 19151711.9
(22) Date de dépôt: 14.01.2019
(51) Int. Cl.: A47J 37/12, A47J 27/14

(54) **APPAREIL DE CUISINE COMPORTANT UNE BONDE DE VIDANGE COMMANDEE PAR UNE COMMANDE HYDRAULIQUE**
KÜCHENGERÄT, DAS EINE ÜBER EINE HYDRAULISCHE STEUERUNG GESTEUERTE ABFLUSSÖFFNUNG UMFASST
KITCHEN APPLIANCE COMPRISING A DRAINAGE CORE CONTROLLED BY A HYDRAULIC CONTROL

(30) Priorité: 13.02.2018 FR 1851198
(43) Date de publication de la demande: 14.08.2019
(73) Titulaire: Illinois Tool Works, Inc., Glenview, Illinois 60025 (US)
(72) Inventeur: BRUN-COSME-GAZOT, Jean-Marc, 39230 Passenans (FR)
(74) Mandataire: HGF

(56) Documents cités:
- EP-A1- 1 304 063
- EP-A1- 1 504 705
- DE-C1- 3 521 364

## Description

### DOMAINE TECHNIQUE

La présente invention concerne un appareil de cuisine, et en particulier un appareil de cuisson.

### ETAT DE L'ART

L'état de la technique comporte notamment les documents EP-A1-1 504 705, EP-A-1 304 063 et DE-C1-35 21 364.

Notamment EP 1 504 705 A1 divulgue un appareil de cuisson selon le préambule de la revendication 1.

De nombreux appareils de cuisson professionnels possèdent une cuve de cuisson, dans laquelle des produits sont destinés à être cuisinés.

La vidange de tels appareils peut être réalisée lors du service des produits cuisinés, par exemple à l'aide d'une louche, ou bien lors du nettoyage de la cuve de cuisson après son utilisation, par exemple par basculement de ladite cuve.

Dans certains appareils de cuisson professionnels, la cuve de cuisson peut comporter un orifice de vidange ou d'évacuation des produits de cuisson et/ou des eaux de cuisson ou de lavage. Par exemple, un appareil de cuisson conventionnel comprend une cuve de cuisson dont l'orifice de vidange est équipé d'une bonde de vidange comportant un clapet dont la position est commandée électriquement. Ce type de bonde est généralement associé à une cuve basculante, le basculement de la cuve servant ici principalement à récupérer les produits de cuisson contenus dans la cuve.

Cependant, la cuve de tels appareils étant destinée à être basculée, il est préférable de ne pas avoir de liaison électrique entre la cuve et le reste de l'appareil de cuisson.

Dans certains appareils de cuisson conventionnels, la bonde de vidange comporte un clapet dont la position est commandée manuellement ou mécaniquement. Par exemple, des moyens de commande motorisés peuvent être situés sous la cuve.

Cependant, la bonde de tels appareils ne peut pas être bloquée dans une position, par exemple dans la position de fermeture de l'orifice de vidange, pendant la cuisson. Ainsi, ces appareils ne permettent pas d'éviter une ouverture accidentelle de la bonde pendant la cuisson.

L'invention propose une solution simple, efficace et économique à au moins une partie des problèmes des technologies antérieures.

### OBJECTIF DE L'INVENTION

L'invention a pour objectif de proposer un appareil de cuisine, en particulier de cuisson, comprenant une cuve de cuisson dont l'orifice de vidange est équipé d'une bonde de vidange comportant un clapet dont la position est commandée hydrauliquement.

### EXPOSE DE L'INVENTION

A cet effet, l'invention propose un appareil de cuisine, en particulier de cuisson, comportant :
- une cuve dont une paroi comprend un orifice de vidange équipé d'une bonde de vidange comportant un clapet mobile entre une position de fermeture et une position d'ouverture dudit orifice de vidange,
- des moyens de raccordement fluidique à une arrivée d'eau,
caractérisé en ce que ladite bonde de vidange est reliée auxdits moyens de raccordement et est configurée de sorte que son clapet soit déplacé entre ladite position de fermeture et ladite position d'ouverture, ou inversement, lorsque la bonde est alimentée en eau par lesdits moyens de raccordement, et en ce que l'appareil de cuisine comprend en outre des moyens de commande de l'alimentation en eau de la bonde.

Avantageusement, la commande hydraulique de la bonde de vidange selon l'invention est plus fiable que les commandes électriques, manuelles ou mécaniques des bondes de vidange selon les techniques antérieures.

De plus, la commande hydraulique est insensible à la température présente dans l'environnement de la bonde de vidange, contrairement aux commandes électriques, manuelles ou mécaniques des bondes de vidange selon les techniques antérieures.

En outre, la commande hydraulique est plus simple à mettre en œuvre que des commandes à motoréducteurs selon les techniques antérieures.

La cuve peut être alimentée en eau par les moyens de raccordement, de manière à remplir la cuve en eau. Ainsi, les moyens de raccordement peuvent permettre l'alimentation à la fois en eau de la cuve et à la fois de la commande hydraulique de la bonde. Ceci est avantageux car la commande hydraulique ne nécessite pas de source de fluide supplémentaire, mais utilise une source de fluide déjà utilisée par l'appareil de cuisine.

Selon un mode de réalisation, la cuve est montée mobile, par exemple basculante, sur l'appareil de cuisine.

Un conduit de fluide souple peut s'étendre entre les moyens de raccordement et la bonde de vidange.

Un appareil de cuisine selon l'invention permet d'éviter d'avoir des liaisons électriques entre la cuve et le reste de l'appareil de cuisine. Ainsi, lorsque la cuve est montée mobile sur l'appareil de cuisine, l'appareil ne comporte pas de liaisons électriques entre la cuve et le reste de l'appareil, ce qui permet un basculement de la cuve sans risque de rupture desdites liaisons électriques.

Alternativement, la cuve peut être montée fixe sur l'appareil de cuisine.

Les moyens de commande peuvent être reliés à une électrovanne montée entre les moyens de raccordement et la bonde de vidange.

De préférence, l'électrovanne comporte un limiteur de pression configuré pour réduire la pression de l'eau circulant en aval de l'électrovanne par rapport à la pression de l'eau de circulant en amont de ladite électrovanne.

La bonde de vidange peut être montée entre l'électrovanne et un limiteur de débit.

La bonde de vidange peut comprendre :
- une chambre reliée fluidiquement aux moyens de raccordement et configurée pour être alimentée en eau, et
- un piston relié au clapet et mobile en translation le long d'un axe longitudinal, en fonction de l'alimentation en eau de ladite chambre.

De préférence, la bonde de vidange comprend également une membrane souple logée dans ladite chambre et configurée pour être déformée élastiquement par l'eau depuis une première position de repos jusqu'à une seconde position contrainte dans laquelle elle exerce une force sur ledit piston pour le déplacer en translation.

La membrane souple peut s'étendre sensiblement perpendiculairement au piston, ladite membrane étant configurée pour être déformée élastiquement par l'eau le long de l'axe longitudinal du piston.

De préférence, la membrane souple est étanche.

La bonde de vidange peut comprendre en outre des moyens de rappel élastique configurés pour exercer une force de rappel sur ledit piston et le solliciter dans une de ses positions, en particulier lorsque la chambre n'est plus alimentée en eau.

Les moyens de rappel élastique peuvent être agencés autour d'au moins une partie du piston.

De préférence, les moyens de rappel élastique comprennent un ressort de rappel.

La chambre peut comporter un orifice d'arrivée d'eau, la chambre étant configurée pour être alimentée en eau au travers dudit orifice.

De préférence, la chambre est configurée pour que l'eau s'échappe au travers dudit orifice lorsque la chambre n'est plus alimentée en eau.

La paroi peut être mobile entre une première position dans laquelle elle s'étend dans un plan sensiblement orthogonal à l'axe longitudinal et une deuxième position dans laquelle elle s'étend dans un plan incliné par rapport audit plan sensiblement orthogonal à l'axe longitudinal.

En particulier, la paroi peut être configurée de façon à ce que, lorsque le clapet est dans sa position d'ouverture, la paroi est maintenue dans sa deuxième position. Avantageusement, ceci permet une optimisation de la vidange de l'appareil de cuisine.

Selon un mode de réalisation, les moyens de commande comportent un écran tactile.

Les moyens de commande peuvent être configurés pour commander d'autres fonctions de l'appareil de cuisine, tels que des modes de cuisson.

De préférence, les moyens de commande sont paramétrés de façon à ce que, lorsqu'au moins un desdits modes de cuisson est activé et en cours de réalisation, le clapet est maintenu dans une de ses positions, et en particulier sa position de fermeture.

De façon avantageuse, la commande hydraulique de la bonde de vidange permet de contrôler le fonctionnement de ladite bonde lors de l'utilisation de certaines fonctions de l'appareil de cuisine, par exemple lors de l'utilisation d'un mode friteuse ou au cours d'un cycle de nettoyage automatique, où l'ouverture de l'orifice de vidange n'est pas souhaitée ou dangereuse.

En outre, la commande hydraulique permet de garantir que la bonde de vidange reste dans sa position de fermeture de l'orifice de vidange dans la majorité des cas de défaillances des moyens de commande, ce qui permet de continuer à pouvoir utiliser l'appareil de cuisine.

En outre, la bonde de vidange peut être bloquée dans la position de fermeture de l'orifice de vidange pendant l'utilisation d'une fonction de l'appareil de cuisine, par exemple la cuisson. Ainsi, un appareil de cuisine selon l'invention permet d'éviter une ouverture accidentelle de ladite bonde pendant la cuisson.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique en perspective d'un appareil de cuisine selon l'invention ;
- la figure 2 est une vue schématique en perspective d'une cuve de cuisson d'un appareil de cuisine selon l'invention ;
- la figure 3 est une vue schématique de dessus de la cuve de cuisson de la figure 2 ;
- la figure 4 est une vue schématique selon la coupe A-A de la cuve de cuisson de la figure 3 ;
- la figure 5 est une vue schématique selon la coupe B-B de la cuve de cuisson de la figure 3 ;
- la figure 6 est une vue schématique en coupe d'une bonde de vidange d'un appareil de cuisine selon l'invention ;
- la figure 7 est une vue schématique éclatée de la bonde de vidange de la figure 6 ;
- les figures 8 et 9 représentent des vues schématiques en coupe d'une bonde de vidange d'un appareil de cuisine selon l'invention respectivement dans une position de fermeture de l'orifice de vidange et d'ouverture de l'orifice de vidange ;
- la figure 10 représente schématiquement les moyens de commande de l'appareil de cuisine selon l'invention ; et
- la figure 11 représente schématiquement le raccordement hydraulique de la bonde de vidange de l'appareil de cuisine selon l'invention à une arrivée d'eau.

### DESCRIPTION DETAILLEE DE L'INVENTION

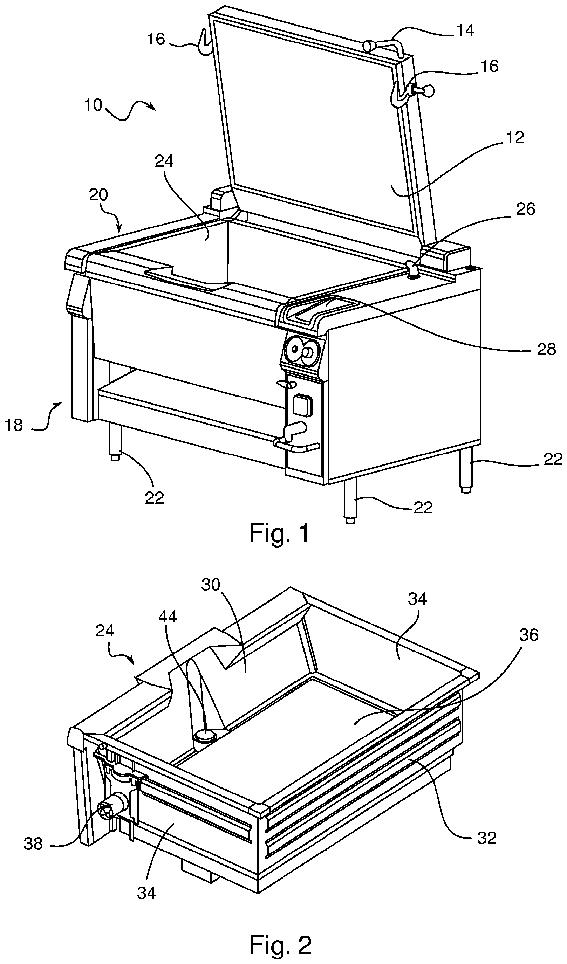

Un appareil de cuisine 10, et en particulier de cuisson, est représenté sur la figure 1.

L'appareil de cuisson peut être une machine multifonction comportant par exemple des fonctions de « sauteuse », de « marmite », de « marmite à pression », c'est-à-dire de cuisson sous pression, et de « friteuse ».

L'appareil de cuisine 10 peut avoir une forme générale parallélépipédique, lorsque le couvercle 12 de l'appareil est dans sa position de fermeture, la position d'ouverture dudit couvercle 12 étant représentée sur la figure 1.

Le couvercle 12 de l'appareil est monté mobile en rotation entre une position sensiblement horizontale de fermeture de l'appareil de cuisine 10 et une position sensiblement verticale d'ouverture dudit appareil.

Le couvercle 12 peut être muni de moyens de préhension 14, ici une poignée, pour que l'utilisateur puisse manier le couvercle 12 entre sa position d'ouverture et de fermeture.

Le couvercle 12 peut être également muni de moyens de blocage 16, ici des crochets, de manière à bloquer le couvercle dans sa position de fermeture de l'appareil, et ainsi permettre la cuisson sous pression.

L'appareil de cuisine 10 comporte une face avant 18 et une face supérieure 20 accessibles par un utilisateur.

Comme représenté sur la figure 1, l'appareil de cuisine 10 peut être équipé de pieds 22 d'appui sur le sol qui sont reliés à une face inférieure de l'appareil. Les pieds 22 peuvent être réglables en hauteur de manière à mettre la face supérieure 20 de l'appareil de cuisine 10 à une hauteur donnée et à faciliter le nettoyage du sol sous l'appareil.

L'appareil de cuisine 10 comporte une cuve de cuisson 24, dont le fond est destiné à être chauffé.

La cuve de cuisson 24 peut être du type mobile, c'est-à-dire qu'elle peut être montée de manière mobile sur l'appareil de cuisine 10 et être destinée à être démontée ou à être basculée pour récupérer les produits de cuisson contenus dans la cuve ou pour sa vidange.

Alternativement, la cuve de cuisson peut aussi être du type fixe, c'est-à-dire qu'elle peut être montée de manière fixe sur l'appareil de cuisine et ne pas être destinée à être démontée ni à être basculée.

La cuve de cuisson 24 peut être réalisée en matériau métallique.

L'appareil de cuisine 10 comprend des moyens de raccordement fluidique à une arrivée d'eau. Par exemple sur la figure 1, des moyens de raccordement fluidique, ici un robinet 26, sont agencés entre la cuve de cuisson 24 et une arrivée d'eau (non représentée) en vue de l'utilisation d'eau pour la cuisson des produits et pour le nettoyage de la cuve 24 après son utilisation.

L'appareil de cuisine 10 peut comprendre des moyens de chauffage (non représentés) du fond de la cuve de cuisson 24.

L'appareil de cuisine 10 comprend des moyens de commande 28 de différentes fonctions de l'appareil. Les moyens de commande 28 sont configurés pour commander des fonctions de l'appareil de cuisine 10, telles que des modes de cuisson.

Les moyens de commande 28 peuvent comprendre des moyens de régulation du fond de la cuve de cuisson 24. Les moyens de régulation du chauffage sont généralement situés sur la face avant 18 ou sur la face supérieure 20 de l'appareil de cuisine 10 et sont accessibles par l'utilisateur.

Les figures 2 à 5 représentent une cuve de cuisson 24 de l'appareil de cuisine 10.

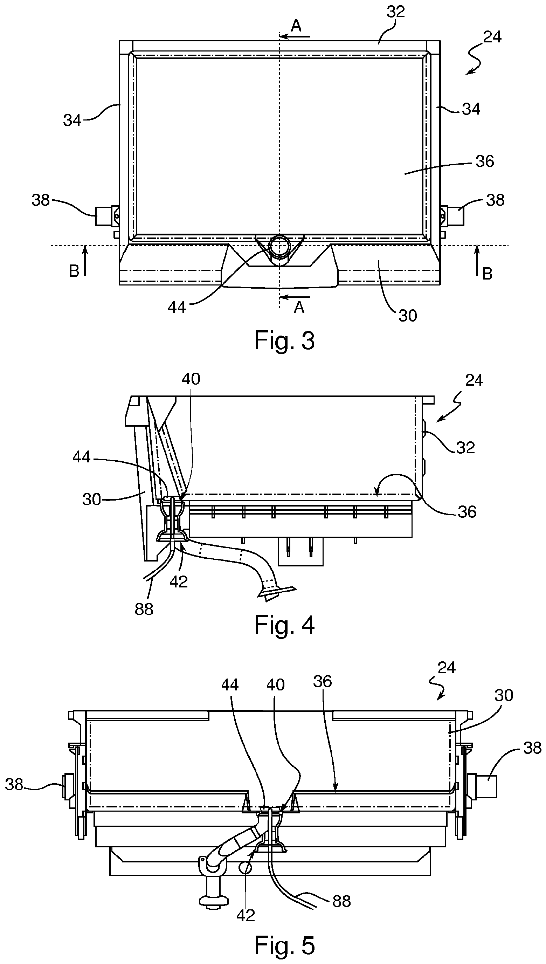

La cuve de cuisson 24 a une forme générale sensiblement parallélépipédique et comporte ici des parois avant 30, arrière 32 et latérales 34 sensiblement verticales. Ces parois s'étendent vers le haut depuis une paroi inférieure sensiblement horizontale, dite paroi de cuisson 36, et définissent avec celle-ci un volume destiné à contenir des produits à cuire. La paroi avant 30 forme ici un dièdre, notamment visible sur la figure 4, dont le sommet est orienté vers l'avant de l'appareil de cuisine 10.

La cuve de cuisson 24 peut comporter des moyens de blocage 38, ici des excroissances, complémentaires aux moyens de blocage 16 du couvercle. de manière à bloquer le couvercle 12 dans sa position de fermeture de la cuve.

La paroi de cuisson 36 comprend un orifice de vidange 40. Bien entendu, la paroi de cuisson 36 peut comprendre une pluralité d'orifices de vidange.

De préférence, la paroi de cuisson 36 comprend un seul orifice de vidange 40. Ceci permet de limiter le nettoyage et de simplifier la cuve de cuisson 24 par rapport à une vidange séparée pour le produit et une vidange pour les eaux de lavage ou de cuisson.

Sur les figures 2 et 3, l'orifice de vidange 40 est représenté situé au niveau de l'extrémité avant de la paroi de cuisson 36, sensiblement au milieu de celle-ci. En particulier, l'orifice de vidange 40 est agencé dans le dièdre formé par la paroi avant 30 de la cuve.

La paroi de cuisson 36 peut comporter une bague 45. Dans ce cas, la bague 45 comporte un orifice qui forme l'orifice de vidange 40. La bague 45 peut être soudée, de préférence de manière étanche, à la paroi de cuisson 36. La bague 45 peut être réalisée dans un matériau identique à celui de la paroi de cuisson 36. En variante, la bague 45 peut être réalisée dans un matériau différent de celui de la paroi de cuisson 36.

L'orifice de vidange 40 est équipé d'une bonde de vidange 42. La bague 45 permet d'assurer une interface avec la bonde de vidange 42.

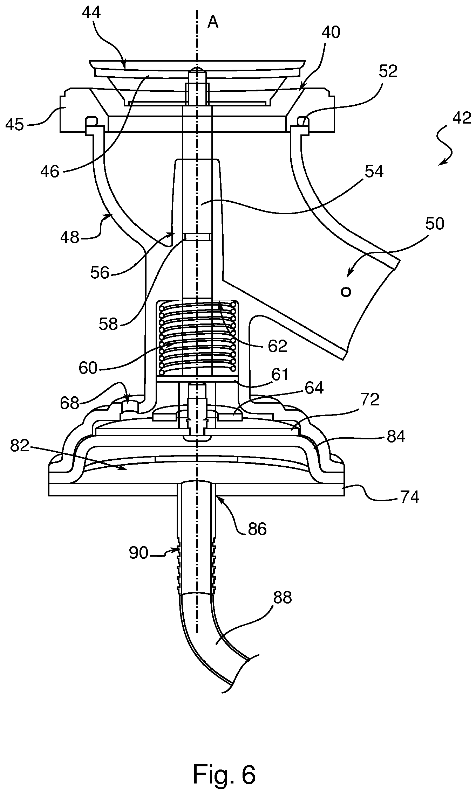

Les figures 6 à 9 représentent une bonde de vidange 42 de l'appareil de cuisine 10.

La bonde de vidange 42 comporte un clapet 44 mobile entre une position de fermeture et une position d'ouverture de l'orifice de vidange 40. Le clapet 44 a généralement une forme sensiblement complémentaire à la forme de l'orifice de vidange 40. Par exemple, le clapet 44 peut avoir une forme générale cylindrique ou tronconique. Le clapet 44 est conformé pour obturer de manière étanche l'orifice de vidange 40 de la paroi de cuisson 36. En particulier, dans position de fermeture de l'orifice de vidange 40, le clapet 44 peut être en contact avec la bague 45 de la paroi de cuisson 36. Le clapet 44 peut être réalisé dans un matériau identique à celui de la paroi de cuisson 36. En variante, le clapet 44 peut être réalisé dans un matériau différent de celui de la paroi de cuisson 36.

Un joint plat 46 d'étanchéité est monté sur le clapet 44. Le joint plat 46 est de préférence réalisé dans une matière résistant à la température, aux huiles et aux produits lessiviels, telle qu'un silicone haute température. Le joint plat 46 coopère avec le bord périphérique interne de l'orifice de vidange 40 lorsque le clapet 44 est dans la position de fermeture de l'orifice de vidange 40. Le joint plat 46 peut coopérer avec le bord périphérique interne de la bague 45 lorsque le clapet 44 est dans la position de fermeture de l'orifice.

La bonde de vidange 42 peut comprendre un corps 48 réalisé par moulage, par exemple d'un matériau métallique ou d'un matériau plastique.

Le corps 48 peut comporter un conduit d'évacuation 50 de forme sensiblement cylindrique et qui s'étend depuis l'orifice de vidange 40. Le conduit d'évacuation 50 peut s'étendre verticalement, c'est-à-dire perpendiculairement, par rapport à la paroi de cuisson 36. Comme représenté sur les figures 4 et 5, le conduit d'évacuation 50 peut s'étendre obliquement par rapport à la paroi de cuisson 36, de manière à réduire les dimensions de la bonde de vidange 42.

Le corps 48 est relié de façon hermétique à l'orifice de vidange 40. Un joint torique 52 d'étanchéité peut être agencé entre la paroi de cuisson 36 et le corps 48. Un joint torique 52 d'étanchéité peut être agencé entre la bague 45 et le corps 48, comme représenté sur la figure 6.

La coopération de la bonde vidange 42 et de l'orifice de vidange 40 permet de maintenir le contenu de la cuve de cuisson 24 à l'intérieur de celle-ci, ou de vidanger la cuve de cuisson 24. De plus, le clapet 44 de la bonde de vidange 42 fermé permet d'offrir une surface de la paroi de cuisson 36 lisse et sans aspérités pour la cuisson. Plus précisément, lorsque le clapet 44 est en position de fermeture de l'orifice de vidange 40, la paroi de cuisson 36 est étanche, tandis que lorsque le clapet 44 est en position d'ouverture de l'orifice de vidange 40, le contenu de la cuve de cuisson 24 s'écoule à travers l'orifice de vidange 40 et dans le conduit d'évacuation 50 jusqu'à ce que la cuve 24 soit vide ou jusqu'à une fermeture de l'orifice de vidange 40.

La bonde de vidange 42 peut comporter un piston 54 relié au clapet 44. Le piston 54 peut être fixé sur le clapet 44, notamment par collage, vissage, moulage, ou clipsage. Le piston 54 est de forme sensiblement cylindrique et s'étend longitudinalement selon un axe noté A sur la figure 6. Le piston 54 est mobile en translation le long de l'axe longitudinal A. L'axe longitudinal A peut être confondu avec un axe de l'orifice de vidange 40.

Le corps 48 comprend un logement cylindrique 56 de forme sensiblement complémentaire à la forme d'une partie du piston 54. Le logement cylindrique 56 est agencé autour d'une partie du piston 54, la partie du piston 54 opposée à la partie du piston 54 reliée au clapet 44.

Le piston 54 comporte, sur cette partie, un joint torique 58 d'étanchéité permettant que tout le contenu de la cuve de cuisson 24 qui s'écoule à travers l'orifice de vidange 40 s'écoule dans le conduit d'évacuation 50, et non au niveau du logement cylindrique 56.

La bonde de vidange 42 comporte des moyens 60 de rappel élastique configurés pour exercer une force de rappel sur le piston 54. Les moyens 60 de rappel élastique peuvent comprendre un ressort de rappel. Les moyens 60 de rappel élastique peuvent être agencés autour d'au moins une partie du piston 54, comme représenté sur la figure 6.

Ici, les moyens 60 de rappel élastique comportent un unique ressort de rappel agencé autour d'une partie du piston 54, c'est-à-dire que le piston 54 est agencé au centre du ressort de rappel. Bien entendu, les moyens de rappel élastique peuvent comprendre une pluralité de ressorts de rappel, chaque ressort étant disposé autour du piston 54, de sorte que le piston 54 est entouré de ressorts de rappel.

Les moyens 60 de rappel élastique sont configurés pour solliciter le piston 54 dans une de ses positions. En particulier, les moyens 60 de rappel élastique sont configurés pour solliciter le piston 54 dans sa position de fermeture de l'orifice de vidange 40. Les moyens 60 de rappel élastique exercent une force de rappel longitudinalement selon l'axe A.

La bonde de vidange 42 peut comporter une rondelle 61 contre laquelle les moyens 60 de rappel élastique viennent en butée. La rondelle 61 s'étend sensiblement perpendiculairement à l'axe A. La rondelle 61 a une forme sensiblement annulaire et est agencée autour du piston 54.

Le piston 54 comporte une portion 54a de dimension radiale supérieure au reste du piston. La portion 54a est agencée à l'extrémité opposée à celle reliée au clapet 44. La rondelle 61 est en appui contre la portion 54a du piston.

Le corps 48 comprend une butée 62 contre laquelle les moyens de rappel sont agencés. La butée 62 s'étend sensiblement perpendiculairement à l'axe A. La butée 62 a une forme sensiblement annulaire, la butée 62 comportant un orifice traversé par le piston 54.

Les moyens 60 de rappel sont ainsi agencés entre la butée 62 et la rondelle 61, la rondelle 61 étant mobile en translation le long de l'axe A.

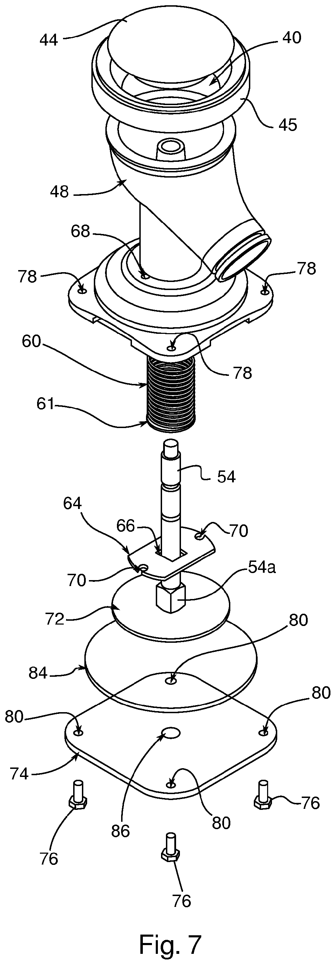

La bonde de vidange 42 peut également comporter une butée anti-rotation 64. La butée anti-rotation 64 comporte un orifice 66 à travers lequel s'étend le piston 54, comme représenté sur la figure 7, et plus précisément la portion 54a du piston. La butée anti-rotation permet d'éviter une rotation du piston 54, et donc du clapet 44 dans l'orifice de vidange 40, mais aussi une rotation des moyens 60 de rappel élastique.

La bonde de vidange 42 comporte des moyens de fixation entre le corps 48 et la butée anti-rotation 64. Plus précisément, comme représenté sur la figure 6, le corps 48 comporte des orifices 68 dans lesquels les moyens de fixation sont destinés à être insérés. La butée anti-rotation 64 comporte des orifices 70 visibles sur la figure 7, dans lesquels les moyens de fixation sont destinés à être insérés. Les moyens de fixation peuvent être des vis ou des rivets à clou.

La bonde de vidange 42 peut comporter une plaque 72 de forme sensiblement cylindrique. La plaque 42 est fixée au piston 54, à l'extrémité du piston 54 opposée à celle fixée au clapet 44. La plaque 72 s'étend sensiblement perpendiculairement à l'axe A. La plaque 72 comporte un orifice par lequel elle est fixée au piston 54, et plus précisément à la portion 54a.

La bonde de vidange peut comporter une flasque 74 de forme sensiblement cylindrique. La flasque 74 s'étend sensiblement perpendiculairement à l'axe A.

La bonde de vidange 42 comporte des moyens de fixation 76 entre le corps 48 et la flasque 74. Plus précisément, comme représenté sur la figure 7, le corps 48 comporte des orifices 78 dans lesquels les moyens de fixation 76 sont destinés à être insérés. La flasque 74 comporte des orifices 80, visibles sur la figure 7, dans lesquels les moyens de fixation 76 sont destinés à être insérés. Les moyens de fixation 76 peuvent être des vis.

L'espace délimité par le corps 48, la flasque 74 et la plaque 72 définit une chambre 82.

La bonde de vidange 42 comprend une membrane souple 84 logée dans la chambre 82. La membrane souple 84 a une forme sensiblement cylindrique et s'étend sensiblement perpendiculairement à l'axe A. Comme représenté sur la figure 6, la membrane souple 84 s'étend entre la plaque 72 et la flasque 74. La membrane souple 84 peut être réalisée en matériau ayant une bonne capacité d'allongement, par exemple un élastomère tel que du silicone. La membrane souple 84 peut avoir une épaisseur supérieure ou égale à 1 mm, de préférence supérieure ou égale à 2 mm, et par exemple égale à 3 mm.

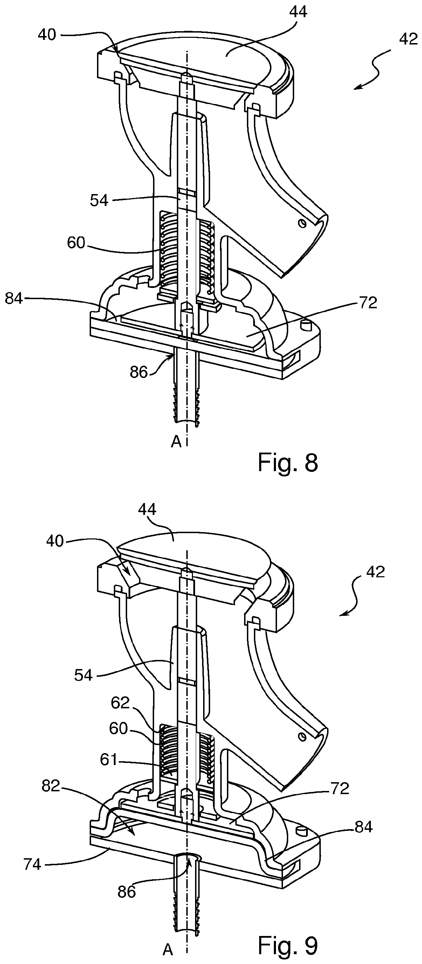

Les figures 8 et 9 représentent une bonde de vidange 42 de l'appareil de cuisine 10 respectivement en position de fermeture et en position d'ouverture de la bonde.

La bonde de vidange 42 est configurée pour être alimentée en eau par les moyens de raccordement fluidique.

En particulier, la position du clapet 44 est commandée hydrauliquement Lorsque la bonde de vidange 42 est alimentée en eau par les moyens de raccordement fluidique, la bonde de vidange 42 est configurée de sorte que son clapet 44 soit déplacé entre la position de fermeture et la position d'ouverture, ou inversement.

En particulier, la chambre 82 est configurée pour être alimentée en eau. La chambre 82 est reliée fluidiquement aux moyens 26 de raccordement fluidique.

La chambre 82 peut comporter un orifice 86 d'arrivée d'eau. L'orifice 86 d'arrivée d'eau peut être aligné avec l'axe longitudinal A. Sur les figures 6 et 7, la flasque 74 comporte l'orifice 86 d'arrivée d'eau dans la chambre 82. La chambre 82 est configurée pour être alimentée en eau au travers de l'orifice 86.

La chambre 82 peut être configurée pour que l'eau s'échappe au travers de l'orifice 86 lorsque la chambre n'est plus alimentée en eau. Autrement dit, l'orifice 86 est un orifice d'arrivée d'eau et de sortie d'eau de la chambre 82.

La membrane souple 84 est configurée pour être déformée élastiquement par l'eau. La membrane souple 84 est configurée pour être déformée élastiquement par l'eau depuis une première position de repos jusqu'à une seconde position contrainte. La membrane souple 84 est configurée pour être déformée le long de l'axe longitudinal A.

De préférence, la membrane souple 84 est étanche. Ainsi, l'eau présente dans la chambre 82 ne s'échappe pas au niveau du piston 54.

Dans sa position contrainte, la membrane souple 84 exerce une force sur le piston 54 pour le déplacer en translation. Le piston 54 est ainsi mobile en translation en fonction de l'alimentation en eau de la chambre 82.

Les moyens 60 de rappel élastique sont configurés pour exercer une force de rappel sur le piston 54 lorsque la chambre n'est plus alimentée en eau. Les moyens 60 de rappel élastique sont configurés pour solliciter le piston 54 dans sa position de fermeture de l'orifice de vidange 40 lorsque la chambre n'est plus alimentée en eau.

Comme représenté sur la figure 8, la membrane souple 84 est dans sa position de repos. La membrane souple 84 n'est pas déformée, il n'y a pas d'eau dans la chambre 82. Le piston 54 est dans position de fermeture de l'orifice de vidange 40. Les moyens 60 de rappel élastique exercent une force de rappel pour maintenir le piston dans sa position de fermeture de l'orifice de vidange 40.

Sur la figure 9, la membrane souple 84 est dans sa position de contrainte. La membrane souple 84 est déformée par l'eau présente dans la chambre 82. En particulier, l'eau introduite dans la chambre 82 est sous pression. La déformation de la membrane souple 84 a déplacé la plaque 72 le long de l'axe A, ce qui a entrainé le déplacement du piston 54 et donc l'ouverture de l'orifice de vidange 40. Les moyens 60 de rappel élastique sont compressés. La force exercée par l'eau pour déformer la membrane souple 84 est supérieure à la force de rappel des moyens 60 de rappel élastique, de sorte que les moyens 60 de rappel élastique sont contraints entre la butée 62 et la rondelle 61.

Un conduit 88 de fluide souple peut s'étendre entre les moyens de raccordement et la bonde de vidange 42. Un tel conduit 88 est par exemple représenté sur les figures 4 à 6. Le conduit 88 de fluide souple peut être raccordé à la bonde de vidange 42 au moyen d'un adaptateur 90. L'adaptateur 90 peut être un adaptateur lisse cannelé.

Les moyens de commande 28 sont configurés pour commander l'alimentation en eau de la bonde de vidange 42. Autrement dit, les moyens de commande 28 commandent à la fois les différentes fonctions de l'appareil de cuisine 10, telles que des modes de cuisson, et la vidange de la cuve de cuisson.

Les moyens de commande 28 peuvent comporter un écran tactile.

Les moyens de commande 28 peuvent comporter des boutons, par exemple tactiles, chaque bouton correspondant à une fonction de l'appareil de cuisine 20.

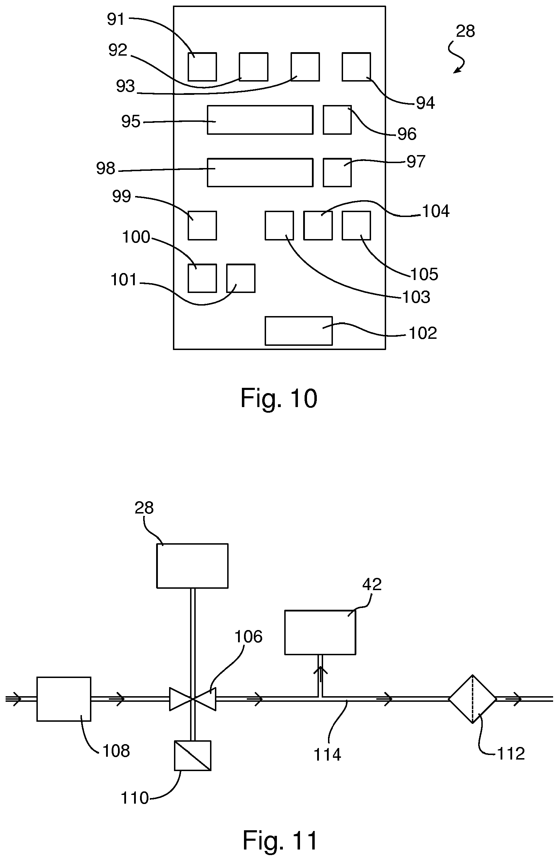

Par exemple, sur la figure 10, des moyens de commande 28 sont représentés.

Les moyens de commande 28 comportent des boutons 91, 92, 93, 94 de commande des fonctions de cuisson. Par exemple, le bouton « sauteuse » 91 commande la fonction «sauteuse» de l'appareil de cuisine 10, le bouton « marmite » 92 commande la fonction « marmite » de l'appareil de cuisine 10, le bouton « pression » 93 commande la fonction « marmite à pression », c'est-à-dire la mise sous pression du contenu de la marmite, de l'appareil de cuisine 10, et le bouton « friteuse » 94 commande la fonction « friteuse » de l'appareil de cuisine 10.

Les moyens de commande 28 comportent un bouton « consigne de température » 95 de commande de la température de cuisson, un bouton « préchauffage » 96 d'activation de la fonction de préchauffage de l'appareil de cuisine 10, et un bouton « sonde de température » 97 de commande d'une sonde de température.

Les moyens de commande 28 comportent un bouton « temps écoulé » 98 de commande d'un minuteur, et un bouton « multi » 99 pour activer en même temps plusieurs zones de cuisson de l'appareil de cuisine 10 à différentes températures ou pour des durées différentes. Par exemple, le bouton « multi » 99 permet d'avoir plusieurs zones, par exemple trois zones, de la paroi de cuisson 36 à différentes températures afin de faire des cuissons au contact différentes, telles que la cuisson dite « bleue » sur une première zone, la cuisson dite « saignante » sur une deuxième zone ou la cuisson dite « bien cuit » sur une troisième zone. De même, le bouton « multi » 99 permet d'avoir plusieurs zones de la paroi de cuisson 36 à une même température, mais pendant des temps de cuisson différents, afin de faire des cuissons en immersion différentes.

Les moyens de commande 28 comportent un bouton « ajouter » 100 pour ajouter une fonction de cuisson au programme de cuisson en cours, un bouton « enregistrer » 101 pour enregistrer des paramètres de cuisson tels que la température ou la durée de la cuisson, et un bouton « départ » 102 pour lancer la cuisson.

Dans le cas d'une cuve de cuisson 24 du type mobile, les moyens de commande 28 comportent un bouton «basculement de la cuve» 103 pour commander le basculement de la cuve de cuisson 24.

Les moyens de commande 28 comportent un bouton «vidange» 104 d'activation de la vidange, c'est-à-dire de commande d'ouverture de l'orifice de vidange 40.

Les moyens de commande 28 comportent également un bouton « remplissage » 105 de remplissage de la cuve de cuisson 24, c'est-à-dire de fermeture de l'orifice de vidange 40 et d'activation de l'arrivée d'eau.

Certains boutons, tels que les boutons « multi » 99, « basculement de la cuve » 103 et « remplissage » 105, permettent d'afficher un sous-menu, chaque sous-menu permettant soit d'afficher un autre sous-menu, soit d'exécuter une fonction de l'appareil de cuisson.

Comme représenté sur la figure 11, les moyens de commande 28 peuvent être reliés à une électrovanne 106 montée entre les moyens 108 de raccordement et la bonde de vidange 42. Les moyens de commande 28 permettent d'activer l'ouverture ou la fermeture de l'électrovanne 106. Lorsque l'électrovanne 106 est ouverte, l'eau provenant d'une arrivée d'eau passe des moyens de raccordement 108 à l'électrovanne 106, puis dans la bonde de vidange 42.

De préférence, l'électrovanne 106 peut être munie un limiteur de pression 110 configuré pour réduire la pression de l'eau circulant en aval de l'électrovanne 106 par rapport à la pression de l'eau de circulant en amont de l'électrovanne 106.

Un limiteur de débit 112 peut être monté après la bonde de vidange 42. Autrement dit, la bonde de vidange 42 peut être montée entre l'électrovanne 106 et le limiteur de débit 112. Le limiteur de débit 112 permet une augmentation de la pression dans le conduit 114. En l'absence du limiteur de débit 112, la pression dans le conduit 114 serait sensiblement constante à la pression atmosphérique.

En particulier, de l'eau s'échappe en permanence par un orifice du limiteur de débit 112.

Le débit de fuite est calibré en fonction de la vitesse de fermeture de l'électrovanne 106 et de l'eau qui s'échappe pendant le temps d'ouverture de l'électrovanne 106. Par exemple, le limiteur de débit 112 peut limiter le débit de plus de 0,2 L/min, et de préférence de l'ordre de 0,5 L/min.

Lorsque l'électrovanne 106 est ouverte, la pression monte dans le conduit 114 en aval de l'électrovanne 106, et de l'eau s'échappe à travers l'orifice du limiteur de débit 112. En particulier, l'électrovanne 106 n'est ouverte que pendant un temps court. Sur la figure 11, les flèches illustrent le trajet de l'eau depuis l'arrivée d'eau (non représentée) à la bonde de vidange 42.

Lorsque l'électrovanne 106 est fermée, de l'eau s'échappe à travers l'orifice du limiteur de débit 112 et la pression dans le conduit 114 en aval de l'électrovanne 106 diminue progressivement avec la fuite d'eau.

Les moyens de commande 28 sont paramétrés de façon à ce que, lorsqu'au moins un des modes de cuisson est activé et en cours de réalisation, le clapet 44 est maintenu dans une de ses positions. En particulier, les moyens de commande 28 peuvent être paramétrés de façon à ce que le clapet 44 est maintenu dans sa position de fermeture lorsqu'au moins un des modes de cuisson est activé et en cours de réalisation.

Le fond de la cuve de cuisson 24, et plus précisément la paroi de cuisson 36, peut être configuré pour être mobile entre une première position sensiblement horizontale, par exemple dans un plan sensiblement orthogonal à l'axe longitudinal A, et une deuxième position légèrement inclinée par rapport à ladite position sensiblement horizontale, par exemple dans un plan incliné par rapport audit plan sensiblement orthogonal à l'axe longitudinal A.

Le fond de la cuve de cuisson 24 peut par exemple être basculé d'un angle inférieur ou égal à 20°, de préférence d'un angle inférieur ou égal à 10° par rapport à un plan sensiblement horizontal.

Lors de l'activation d'une fonction de cuisson, la paroi de cuisson 36 peut être positionnée sensiblement horizontalement, c'est-à-dire sensiblement orthogonalement à l'axe A. Ceci permet une répartition optimale du contenu de la cuve de cuisson, tel que de la matière grasse utilisée pour la cuisson.

Lors de l'activation de la fonction de vidange, la paroi de cuisson 36 peut être basculée par rapport au plan sensiblement horizontal. En particulier, la cuve de cuisson 36 peut être basculée vers la face avant de l'appareil de cuisine 10, c'est-à-dire en direction de l'orifice de vidange 40. Ceci permet avantageusement une optimisation de la vidange de la cuve de cuisson, et donc de l'appareil de cuisine.

## Revendications

1. Appareil de cuisine (10), en particulier de cuisson, comportant :
- une cuve (24) dont une paroi (36) comprend un orifice de vidange (40) équipé d'une bonde de vidange (42) comportant un clapet (44) mobile entre une position de fermeture et une position d'ouverture dudit orifice de vidange,
- des moyens (108) de raccordement fluidique à une arrivée d'eau,
**caractérisé en ce que** ladite bonde de vidange (42) est reliée auxdits moyens (108) de raccordement et est configurée de sorte que son clapet (44) soit déplacé entre ladite position de fermeture et ladite position d'ouverture, ou inversement, lorsque la bonde (42) est alimentée en eau par lesdits moyens (108) de raccordement, et **en ce que** l'appareil de cuisine (10) comprend en outre des moyens de commande (28) de l'alimentation en eau de la bonde (42).

2. Appareil de cuisine (10) selon la revendication précédente, dans lequel la cuve (24) est alimentée en eau par lesdits moyens (108) de raccordement.

3. Appareil de cuisine (10) selon l'une des revendications précédentes, dans lequel un conduit (88) de fluide souple s'étend entre lesdits moyens de raccordement (108) et ladite bonde (42).

4. Appareil de cuisine (10) selon l'une des revendications précédentes, dans lequel lesdits moyens de commande (28) sont reliés à une électrovanne (106) montée entre lesdits moyens de raccordement (108) et ladite bonde (42).

5. Appareil de cuisine (10) selon la revendication précédente, dans lequel ladite bonde (42) est montée entre l'électrovanne (106) et un limiteur de débit (112).

6. Appareil de cuisine (10) selon l'une des revendications précédentes, dans lequel la bonde de vidange (42) comprend :
- une chambre (82) reliée fluidiquement auxdits moyens de raccordement (108) et configurée pour être alimentée en eau, et
- un piston (54) relié audit clapet (44) et mobile en translation le long d'un axe longitudinal (A), en fonction de l'alimentation en eau de ladite chambre (82).

7. Appareil de cuisine (10) selon la revendication précédente, dans lequel la bonde de vidange (42) comprend également une membrane souple (84) logée dans ladite chambre (82) et configurée pour être déformée élastiquement par l'eau depuis une première position de repos jusqu'à une seconde position contrainte dans laquelle elle exerce une force sur ledit piston (54) pour le déplacer en translation.

8. Appareil de cuisine (10) selon la revendication précédente, dans lequel la membrane souple (84) s'étend sensiblement perpendiculairement au piston (54), ladite membrane (84) étant configurée pour être déformée élastiquement par l'eau le long de l'axe longitudinal (A) du piston.

9. Appareil de cuisine (10) selon l'une des revendications 6 à 8, dans lequel la bonde de vidange (42) comprend en outre des moyens (60) de rappel élastique configurés pour exercer une force de rappel sur ledit piston (54) et le solliciter dans une de ses positions, en particulier lorsque la chambre (82) n'est plus alimentée en eau.

10. Appareil de cuisine (10) selon l'une des revendications 6 à 9, dans lequel la chambre (82) comporte un orifice (86) d'arrivée d'eau, la chambre (82) étant configurée pour être alimentée en eau au travers dudit orifice (86).

11. Appareil de cuisine (10) selon la revendication précédente, dans lequel la chambre (82) est configurée pour que l'eau s'échappe au travers dudit orifice (86) lorsque la chambre (82) n'est plus alimentée en eau.

12. Appareil de cuisine (10) selon l'une des revendications 6 à 11, dans lequel la paroi (36) est mobile entre une première position dans laquelle elle s'étend dans un plan sensiblement orthogonal à l'axe longitudinal (A) et une deuxième position dans laquelle elle s'étend dans un plan incliné par rapport audit plan sensiblement orthogonal à l'axe longitudinal (A).

13. Appareil de cuisine (10) selon la revendication précédente, dans lequel la paroi (36) est configurée de façon à ce que, lorsque le clapet (44) est dans sa position d'ouverture, elle est maintenue dans sa deuxième position.

14. Appareil de cuisine (10) selon l'une des revendications précédentes, dans lequel lesdits moyens de commande (28) sont configurés pour commander d'autres fonctions de l'appareil de cuisine (10), tels que des modes de cuisson.

15. Appareil de cuisine (10) selon la revendication précédente, dans lequel lesdits moyens de commande (28) sont paramétrés de façon à ce que, lorsqu'au moins un desdits modes de cuisson est activé et en cours de réalisation, le clapet (44) est maintenu dans une de ses positions, et en particulier sa position de fermeture.

## Patentansprüche

1. Küchengerät (10), insbesondere zum Kochen, Folgendes aufweisend:
- eine Wanne (24), deren eine Wand (36) eine Ablauföffnung (40) aufweist, die mit einem Ablassstück (42) ausgestattet ist, das ein Ventil (44) aufweist, das zwischen einer Schließstellung und einer Öffnungsstellung der Ablauföffnung beweglich ist,
- Einrichtung (108) zur Fluidverbindung mit einer Wasserversorgung,
**dadurch gekennzeichnet, dass** das Ablassstück (42) mit der Verbindungseinrichtung (108) verbunden und so ausgebildet ist, dass sein Ventil (44) zwischen der Schließstellung und der Öffnungsstellung oder umgekehrt bewegt wird, wenn dem Stück (42) durch die Verbindungseinrichtung (108) Wasser zugeführt wird, und dass das Küchengerät (10) ferner eine Einrichtung (28) zum Steuern der Zufuhr von Wasser zum Stück (42) aufweist.

2. Küchengerät (10) nach dem vorhergehenden Anspruch, wobei der Wanne (24) durch die Verbindungseinrichtung (108) Wasser zugeführt wird.

3. Küchengerät (10) nach einem der vorhergehenden Ansprüche, wobei sich eine flexible Fluidleitung (88) zwischen der Verbindungseinrichtung (108) und dem Stück (42) erstreckt.

4. Küchengerät (10) nach einem der vorhergehenden Ansprüche, wobei die Steuereinrichtung (28) mit einem Magnetventil (106) verbunden ist, das zwischen der Verbindungseinrichtung (108) und dem Stück (42) angebracht ist.

5. Küchengerät (10) nach dem vorhergehenden Anspruch, bei dem das Stück (42) zwischen dem Magnetventil (106) und einem Durchflussbegrenzer (112) angebracht ist.

6. Küchengerät (10) nach einem der vorhergehenden Ansprüche, wobei das Ablassstück (42) Folgendes aufweist:
- eine Kammer (82), die mit der Verbindungseinrichtung (108) in Fluidverbindung steht und so ausgebildet ist, dass ihr Wasser zugeführt wird, und
- einen Kolben (54), der mit dem Ventil (44) verbunden ist und translatorisch entlang einer Längsachse (A) entsprechend der Zufuhr von Wasser zur Kammer (82) beweglich ist.

7. Küchengerät (10) nach dem vorhergehenden Anspruch, wobei das Ablassstück (42) außerdem eine flexible Membran (84) aufweist, die in der Kammer (82) untergebracht und so ausgebildet ist, dass sie durch das Wasser von einer ersten Ruhestellung elastisch in eine zweite Zwangsstellung verformt wird, in der sie eine Kraft auf den Kolben (54) ausübt, um ihn translatorisch zu bewegen.

8. Küchengerät (10) nach dem vorhergehenden Anspruch, wobei sich die flexible Membran (84) im Wesentlichen senkrecht zum Kolben (54) erstreckt, wobei die Membran (84) so ausgebildet ist, dass sie durch das Wasser entlang der Längsachse (A) des Kolbens elastisch verformt wird.

9. Küchengerät (10) nach einem der Ansprüche 6 bis 8, wobei das Ablassstück (42) ferner Federrückstelleinrichtungen (60) aufweist, die ausgebildet sind, um eine Rückstellkraft auf den Kolben (54) auszuüben und ihn in eine seiner Positionen zu drücken, insbesondere wenn der Kammer (82) kein Wasser mehr zugeführt wird.

10. Küchengerät (10) nach einem der Ansprüche 6 bis 9, wobei die Kammer (82) eine Wassereinlassöffnung (86) aufweist, wobei die Kammer (82) so ausgebildet ist, dass ihr durch die Öffnung (86) Wasser zugeführt wird.

11. Küchengerät (10) nach dem vorhergehenden Anspruch, wobei die Kammer (82) so ausgebildet ist, dass das Wasser durch die Öffnung (86) ablaufen kann, wenn der Kammer (82) kein Wasser mehr zugeführt wird.

12. Küchengerät (10) nach einem der Ansprüche 6 bis 11, wobei die Wand (36) zwischen einer ersten Position, in der sie sich in einer Ebene erstreckt, die im Wesentlichen orthogonal zur Längsachse (A) verläuft, und einer zweiten Position, in der sie sich in einer geneigten Ebene in Bezug auf die Ebene erstreckt, die im Wesentlichen orthogonal zur Längsachse (A) ist, beweglich ist.

13. Küchengerät (10) nach dem vorhergehenden Anspruch, wobei die Wand (36) so ausgebildet ist, dass sie, wenn sich das Ventil (44) in seiner offenen Stellung befindet, in ihrer zweiten Position gehalten wird.

14. Küchengerät (10) nach einem der vorhergehenden Ansprüche, wobei die Steuereinrichtung (28) ausgebildet ist, um andere Funktionen des Küchengeräts (10) zu steuern, beispielsweise Kochmodi.

15. Küchengerät (10) nach dem vorhergehenden Anspruch, wobei die Steuereinrichtung (28) derart ausgebildet ist, dass, wenn mindestens einer der Kochmodi aktiviert ist und ausgeführt wird, das Ventil (44) in einer seiner Stellungen und insbesondere seiner Schließstellung gehalten wird.

## Claims

1. A kitchen appliance (10), in particular for cooking, comprising:
- a vat (24) of which one wall (36) comprises a drain port (40) equipped with a drain plug (42) comprising a valve (44) that is movable between a closing position and an opening position of said drain port,
- means (108) of fluid connection to a water supply,
**characterized in that** said drain plug (42) is connected to said connecting means (108) and is configured such that its valve (44) is moved between said closing position and said opening position, or inversely, when the plug (42) is supplied with water by said connecting means (108), and **in that** the kitchen appliance (10) further comprises means (28) of controlling the supply of water to the plug (42).

2. A kitchen appliance (10) according to the preceding claim, wherein the vat (24) is supplied with water by said connecting means (108).

3. A kitchen appliance (10) according to any of the preceding claims, wherein a flexible fluid line (88) extends between said connecting means (108) and said plug (42).

4. A kitchen appliance (10) according to any of the preceding claims, wherein said control means (28) is connected to a solenoid valve (106) mounted between said connecting means (108) and said plug (42).

5. A kitchen appliance (10) according to the preceding claim, wherein said plug (42) is mounted between the solenoid valve (106) and a flow restrictor (112).

6. A kitchen appliance (10) according to any of the preceding claims, wherein the drain plug (42) comprises:
- a chamber (82) fluidly connected to said connecting means (108) and configured to be supplied with water, and
- a piston (54) connected to said valve (44) and movable in translation along a longitudinal axis (A), according to the supply of water to said chamber (82).

7. A kitchen appliance (10) according to the preceding claim, wherein the drain plug (42) also comprises a flexible membrane (84) housed in said chamber (82) and configured to be elastically deformed by the water from a first resting position to a second constrained position in which it exerts a force on said piston (54) to move it in translation.

8. A kitchen appliance (10) according to the preceding claim, wherein the flexible membrane (84) extends substantially perpendicular to the piston (54), said membrane (84) being configured to be elastically deformed by the water along the longitudinal axis (A) of the piston.

9. A kitchen appliance (10) according to any of claims 6 to 8, wherein the drain plug (42) further comprises spring return means (60) configured to exert a return force on said piston (54) and push it into one of its positions, particularly when the chamber (82) is no longer supplied with water.

10. A kitchen appliance (10) according to any of claims 6 to 9, wherein the chamber (82) comprises a water inlet port (86), the chamber (82) being configured to be supplied with water through said port (86).

11. A kitchen appliance (10) according to the preceding claim, wherein the chamber (82) is configured to allow the water to drain through said port (86) when the chamber (82) is no longer supplied with water.

12. A kitchen appliance (10) according to any of claims 6 to 11, wherein the wall (36) is movable between a first position in which it extends in a plane substantially orthogonal to the longitudinal axis (A) and a second position in which it extends in an inclined plane with respect to said plane substantially orthogonal to the longitudinal axis (A).

13. A kitchen appliance (10) according to the preceding claim, wherein the wall (36) is configured such that, when the valve (44) is in its open position, it is held in its second position.

14. A kitchen appliance (10) according to any of the preceding claims, wherein said control means (28) is configured to control other functions of the kitchen appliance (10), such as cooking modes.

15. A kitchen appliance (10) according to the preceding claim, wherein said control means (28) is configured such that, when at least one of said cooking modes is activated and in progress, the valve (44) is held in one of its positions, and in particular its closing position.
